Europäisches Patentamt

European Patent Office

Office européen des brevets

(11) Numéro de publication: **0 278 852**
A1

# (12) DEMANDE DE BREVET EUROPEEN

(21) Numéro de dépôt: 88400221.3

(22) Date de dépôt: 01.02.88

(51) Int. Cl.4: **B 65 G 47/14**
B 07 C 5/346

(30) Priorité: 04.02.87 FR 8701341

(43) Date de publication de la demande:
17.08.88 Bulletin 88/33

(84) Etats contractants désignés:
AT BE CH DE GB IT LI

(71) Demandeur: **COMMISSARIAT A L'ENERGIE ATOMIQUE**
**31/33, rue de la Fédération**
**F-75015 Paris (FR)**

(72) Inventeur: **Farny, Gérard**
**30, rue Robida**
**F-91130 Ris Orangis (FR)**

(74) Mandataire: **Mongrédien, André et al**
**c/o BREVATOME 25, rue de Ponthieu**
**F-75008 Paris (FR)**

(54) Système de tri d'un très grand nombre de petits objets émetteurs de radiations.

(57) Système automatique de tri d'un très grand nombre de petites pierres (1 à 5) selon leur radioactivité.

Les pierres sont introduites en vrac, notamment en milieu liquide, dans un conteneur (10) de forme conique puis extraits de ce conteneur au moyen d'un extracteur (15) qui, par aspiration, les extrait un par un ; leur activité et leur poids sont mesurés (31, 35) ; un microprocesseur (60) pilote l'installation et opère éventuellement un tri (50).

Application au tri de pierres précieuses irradiées selon le temps de décroissance de leur activité.

EP 0 278 852 A1

# Description

## SYSTEME DE TRI D'UN TRES GRAND NOMBRE DE PETITS OBJETS EMETTEURS DE RADIATIONS

L'objet de la présente invention est un système de tri, selon leur radioactivité, d'un très grand nombre de petits objets de forme éventuellement irrégulière, et de tailles diverses, émetteurs de radiations.

Une application possible d'un tel système est le tri de pierres de joaillerie, de forme généralement polyédrique, préalablement irradiées en fonction de leur activité par unité de poids. L'irradiation est en effet utilisée pour le traitement de certaines pierres précieuses ou semi-précieuses. Par exemple, des topazes blanches peuvent devenir bleues. Mais il est évidemment nécessaire de conserver les pierres irradiées avant leur commercialisation de manière que leur radioactivité passe en-dessous des seuils tolérés. Le temps de cette conservation dépend bien entendu du niveau d'activité et ne doit cependant pas devenir excessif à cause des coûts d'immobilisation de ces objets onéreux. C'est pourquoi il est important d'effectuer avec certitude leur tri afin de les répartir en fonction du temps de conservation nécessaire et suffisant.

Toutefois, la manutention de très nombreuses pierres en vue de leur tri nécessite un système de manutention aussi automatisé que possible et qui en même temps exclut les chocs trop violents sur ces objets fragiles. C'est pourquoi les dispositifs déjà connus, tels que ceux mettant en oeuvre une hélice vibrante qui assure la manutention individuelle des objets, doivent être écartés. Toute intervention humaine doit en principe être exclue en raison des risques de contamination et pour éliminer tout risque d'erreur humaine.

A cet effet, le système de tri selon l'invention est capable d'assurer la manutention de plusieurs centaines de milliers d'objets et à un débit de plusieurs millions par an. Ces objets sont d'abord versés dans un réservoir à parois convergeant vers un point bas ; les objets disposés sensiblement à la verticale de ce point bas sont extraits individuellement du réservoir par aspiration à l'aide d'un tube qui est muni d'un orifice de diamètre inférieur à la plus petite dimension de chaque objet ; des moyens mécaniques opèrent le retrait du tube quand un objet est plaqué par aspiration contre l'orifice des moyens de commande permettent d'interrompre l'aspiration et des moyens de réception permettent de recueillir l'objet qui était plaqué contre l'orifice.

Si les objets sont fragiles, ce qui est le cas de nombreuses pierres, le transvasement dans ledit réservoir s'effectue de préférence en milieu liquide.

L'objet peut ensuite être acheminé par des pistes de transit - plans inclinés et convoyeurs- vers des moyens de mesure de paramètres distinctifs, puis vers un moyen de triage en fonction de ces paramètres. Dans le cas des pierres irradiées, on utilise un capteur d'activité et une balance.

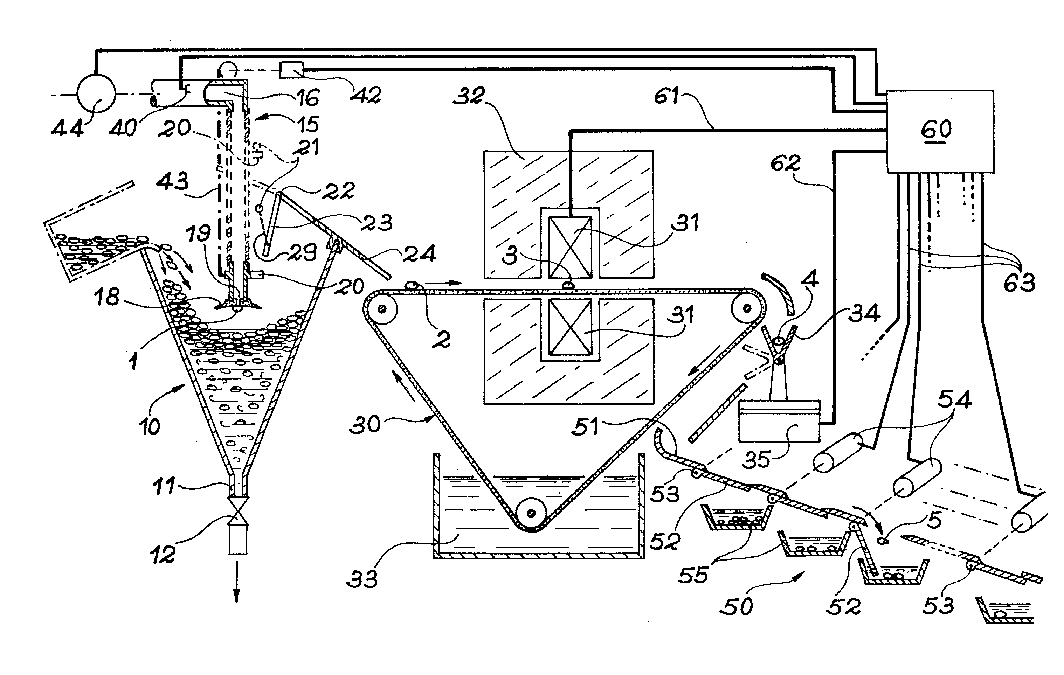

L'invention est décrite ci-après dans son application aux pierres de joaillerie à l'aide des commentaires de la figure unique annexée à titre illustratif et non limitatif.

Les pierres à répartir sont versées en vrac après irradiation dans un conteneur 10 qui est une enveloppe en forme de cône orienté la pointe en bas et terminé à cet endroit par un embout 11 muni d'un robinet 12. Il est en effet nécessaire de protéger des chocs les objets fragiles tels que les pierres précieuses en emplissant d'un liquide les récipients dans lesquels on les verse et les véhicule. Ce liquide est versé dans le conteneur 10 avant l'introduction des pierres, ce qui nécessite une évacuation après chaque chargement au moyen du robinet 12.

Les pierres emplissant le conteneur 10 en sont ensuite extraites individuellement. L'extracteur individuel 15 comprend dans ce but un tube 16, muni à son extrémité inférieure d'une ventouse 18 dont la concavité et la souplesse facilitent la capture d'objets de forme assez irrégulière tels que les pierres précieuses taillées ou préformées de forme convexe, en général polyédrique.

On procède à l'extraction de pierres précieuses en aspirant par une pompe 44 l'air contenu dans le tube 16 ; une pierre 1 est plaquée contre la paroi de la ventouse 18 et bouche l'orifice central 19 de celle-ci, dont le diamètre est inférieur à la plus petite dimension de la pierre 1 ; le prélèvement des pierres se faisant sur l'axe du cône, le trou central produit par l'extraction progressive de pierres est comblé au fur et à mesure par de petits éboulements limités par la forme conique et amortis par le liquide qui les baigne. La variation du débit d'air enregistrée par un capteur 40 provoque le retrait du tube 16: l'information du capteur 40 est envoyée à un microprocesseur 60 qui commande un moteur 42 qui permet le retrait hors du cône du tube 16 suivant l'axe du cône en entraînant une crémaillère 43 par exemple ; la pierre 1 est extraite du conteneur 10.

Au cours de son ascension, une patte 20 accrochée au tube 16 soulève une cheville 21 jusque-là retenue à un point fixe de l'installation. Cette cheville 21 est reliée à un segment de piste 23 par une corde 29 et tend à faire tourner celui-ci autour d'une articulation 22. Quand le tube 16 est complètement rétracté, le segment de piste 23 a été soulevé jusqu'à se trouver sous la pierre 1 et se trouve par ailleurs dans le prolongement d'une piste inclinée 24.

L'aspiration dans le tube 16 est interrompue et la pierre 1 tombe sur le segment de piste 23 puis glisse ou roule le long de ce segment et de la piste inclinée 24. L'articulation 22 présente un certain frottement qui empêche le segment de piste 23 de retomber avant que la pierre 1 l'ait quitté. Finalement, le tube 16 retombe dans le conteneur 10 par son propre poids ou par une commande du microprocesseur 60. On peut procéder à une nouvelle extraction.

La pierre sur la piste inclinée 24 arrive ensuite sur un convoyeur continu 30 dans la position indiquée par la pierre 2 et qui lui fait parcourir un trajet horizontal qui la fait passer devant un ou plusieurs compteurs de radioactivité 31. De nombreux moyens peuvent être utilisés à cet effet, par exemple deux photomultiplicateurs fixés de part et d'autre du convoyeur continu 30, ou encore une diode tunnel. Une grande sensibilité est requise et c'est pourquoi le ou les compteurs de radioactivité 31 sont enfermés dans un blindage 32. L'information concernant l'activité de la pierre en position 3 est introduite dans un système de pilotage 60 capable d'effectuer des opérations de calcul et de commande à l'aide d'une première ligne 61.

Toujours dans le but de garantir une mesure de bonne qualité, il est nécessaire d'assurer la décontamination du convoyeur continu 30 et c'est pourquoi on le fait passer dans une installation de décontamination 33 fonctionnant par ultrasons. Le niveau de contamination résiduelle est vérifié soit par passage du tapis devant un second compteur ou par un passage devant les compteurs 31 sans chargement.

Le convoyeur continu 30 fonctionne par saccades, le temps d'arrêt du tapis étant lié à l'activité de chaque pierre. Le tapis redémarre lorsque les critères statistiques de comptage sont satisfaits.

Les pierres précieuses passent ensuite dans la position référencée 4, c'est-à-dire à l'intérieur d'un entonnoir 34 disposé de manière articulée sur une balance digitale 35. La pierre est pesée et son poids transmis au microprocesseur 60 par une deuxième ligne 62. L'entonnoir 34 bascule alors et verse la pierre au sommet d'un toboggan 51 qui constitue un des éléments d'un trieur 50.

Entre-temps, le microprocesseur 60 a pu calculer la radioactivité de la pierre par unité de poids et a déterminé quel serait le temps de conservation nécessaire pour une décroissance suffisante d'activité. Il sélectionne donc un bac 55 pour la pierre 5 glissant sur le toboggan 51 en commandant l'ouverture d'un volet 52 disposé sur le toboggan 51 et au-dessus du bac 55 sélectionné. L'ouverture du volet 52 est effectuée à l'aide d'un moteur 54 relié au microprocesseur 60 par une ligne de commande 63. Le moteur 54 fait pivoter le volet 52 autour de charnières 53 disposées du côté amont du toboggan 51. La pierre 5 tombe donc dans le bac 55 choisi et qui est avantageusement rempli d'un liquide de manière à amortir sa chute.

La fermeture des volets 52 en dehors d'une action volontaire du système de pilotage 60 peut être garantie à l'aide d'un moyen de rappel tel qu'un ressort sur les charnières 53.

Dans l'exemple d'application décrit, on offre donc un système de manutention et de tri automatique d'un très grand nombre de petits objets irradiés qu'il serait inconcevable d'effectuer de façon non automatique, et pour lequel des systèmes impliquant des contacts mécaniques, tels ceux comportant une hélice vibrante, ne sont pas adaptés à des objets fragiles comme les pierres précieuses.

L'invention s'applique évidemment à d'autres objets que les pierres de joaillerie.

D'autre part, la forme conique du conteneur 10 permet de vider celui-ci de ses pierres, qui se rassemblent peu à peu dans son fond sous la ventouse 18.

## Revendications

1. Système de tri selon leur radioactivité d'un très grand nombre de petits objets émetteurs de radiation, caractérisé en ce qu'il comprend un conteneur (10) à parois convergeant vers un point bas, un tube (16) qui permet d'extraire par aspiration et individuellement les objets disposés sensiblement à la verticale de ce point bas, ce tube présentant une ventouse à orifice (19) d'aspiration de diamètre inférieur à la plus petite dimension de chaque objet, des moyens (42) pour effectuer le retrait du tube vers le haut quand un objet (1) est plaqué contre l'orifice, des moyens de commande (60) pour interrompre l'aspiration et des moyens de réception (23) pour recueillir l'objet qui était plaqué contre l'orifice et pour l'acheminer par des pistes de transit (24, 30, 51) vers un compteur d'activité (31), une balance (35) et un moyen de triage (50) où les objets sont triés en fonction de leur activité par unité de poids.

2. Système de tri suivant la revendication 1, caractérisé en ce que les objets sont transvasés dans ledit conteneur (10) rempli d'un liquide et en ce que ce conteneur (10) comprend un robinet de vidange (12) à l'emplacement dudit point bas.

3. Système de tri suivant l'une quelconque des revendications 1 ou 2, caractérisé en ce que les pistes de transit comprennent un convoyeur continu (30) qui achemine les objets vers le compteur d'activité et qui passe ensuite par une installation de décontamination (33).

4. Système de tri suivant l'une quelconque des revendications 1 à 3, caractérisé en ce que le moyen de triage comprend des bacs (55) correspondant chacun à une mesure de l'activité par unité de poids.

5. Système de tri suivant la revendication 4, caractérisé en ce que lesdits bacs (55) sont remplis d'un liquide.

0278852

Office européen des brevets

# RAPPORT DE RECHERCHE EUROPEENNE

Numero de la demande

EP 88 40 0221

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-3 023 449 (TAIYO YUDEN) <br> * Pages 1,2; revendications 1,2; figures * <br> --- | 1 | B 65 G 47/14 <br> B 07 C 5/346 |
| A | GB-A-2 169 885 (GERSAN) <br> * En entier * <br> --- | 1 | |
| A | WO-A-8 404 707 (UNITED KINGDOM ATOMIC ENERGY AUTHORITY) <br> * Page 3, ligne 18 - page 4, ligne 15; figures * <br> --- | 1,3 | |
| A | EP-A-0 118 856 (TAKEDA) <br> * Page 5, ligne 14 - page 7, ligne 6; page 27, ligne 1 - page 28, ligne 5; figure 1 * <br> --- | 1 | |
| A | FR-A-2 327 173 (NATIONAL DEVELOPMENT CORP.) <br> * Page 32, lignes 2-20; figure 1 * <br> ----- | 2 | |

| | DOMAINES TECHNIQUES RECHERCHES (Int. Cl.4) |
|---|---|
| | B 65 G <br> B 07 C |

Le présent rapport a été établi pour toutes les revendications

| Lieu de la recherche | Date d'achèvement de la recherche | Examinateur |
|---|---|---|
| LA HAYE | 04-05-1988 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)